# EUROPEAN PATENT SPECIFICATION

(11) **EP 4 245 423 B1**
(45) Date of publication and mention of the grant of the patent: **29.04.2026**
(21) Application number: 23153225.0
(22) Date of filing: 25.01.2023
(51) Int. Cl.: B05B 12/04, B05B 12/08, B05B 13/02, H01M 4/04, H01M 4/139

(54) **FILM FORMING APPARATUS, ELECTRODE, ELECTROCHEMICAL ELEMENT, AND FILM FORMING METHOD**
FILMBILDUNGSVORRICHTUNG, ELEKTRODE, ELEKTROCHEMISCHES ELEMENT UND FILMBILDUNGSVERFAHREN
APPAREIL DE FORMATION DE FILM, ÉLECTRODE, ÉLÉMENT ÉLECTROCHIMIQUE ET PROCÉDÉ DE FORMATION DE FILM

(30) Priority: 18.03.2022 JP 2022044207
(43) Date of publication of application: 20.09.2023
(73) Proprietor: Ricoh Company, Ltd., Tokyo 143-8555 (JP)
(72) Inventor: NEMOTO, Yoshimi, Tokyo 143-8555 (JP)
(74) Representative: J A Kemp LLP

(56) References cited:
- WO-A1-2018/164076
- US-A1- 2008 117 467
- US-A1- 2015 340 682

## Description

### BACKGROUND

### Technical Field

The present disclosure relates to a film forming apparatus, an electrode, an electrochemical element, and a film forming method.

### Related Art

Conventionally, a film forming technique for forming a film on a base is known. This film forming technique is used for film formation and the like in the production of an electrode element, an electrochemical element, or a secondary battery.

As the film forming technique, a technique is disclosed, in which a plurality of liquid discharge heads are provided in the conveyance direction of a base, and a liquid is discharged in multiple stages to apply the liquid discharged from the liquid discharge heads onto the base (see, for example, Japanese Unexamined Patent Application No. 2003-275663). WO 2018/164076 A1 discloses a film electrode, resin layer forming ink, inorganic layer forming ink, and electrode printing apparatus.

### SUMMARY

A film forming apparatus is desired to form a film having a controlled film thickness and excellent quality.

An object of the present invention is to provide a film forming apparatus that can form a film having a controlled film thickness and excellent quality.

A film forming apparatus is defined according to claim 1.

An electrode according to an aspect of the present invention includes a base and a film on the base. The film has a first coating film region and a second coating film region, and the first and second coating film regions are disposed alternately and periodically in a predetermined direction.

An electrochemical element according to an aspect of the present invention includes the above electrode.

A film forming method is defined according to claim 13.

According to the present disclosure, a film forming apparatus is provided that can form a film having a controlled film thickness and excellent quality.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating the general arrangement of an electrode producing apparatus according to an embodiment of the present invention;
FIG. 2 is a diagram illustrating the detailed configuration of a liquid applying unit according to an embodiment of the present invention;
FIG. 3 is a block diagram illustrating the functional configuration of a control unit according to an embodiment of the present invention;
FIG. 4 is a flowchart illustrating processing by a control unit according to an embodiment of the present invention;
FIG. 5 is a diagram illustrating liquid disposition data according to an embodiment of the present invention;
FIG. 6 is a plan view of an application example of a liquid composition according to a first embodiment of the present invention;
FIG. 7A is a schematic view of a first example of an electrode including a first coating film region and a second coating film region;
FIG. 7B is a schematic view of a second example of an electrode including a first coating film region and a second coating film region;
FIG. 8A is a diagram illustrating a method for forming an electrode including a first coating film region and a second coating film region using a binarized image;
FIG. 8B is a diagram illustrating a method for forming an electrode including a first coating film region and a second coating film region using a measurement result of a film thickness;
FIG. 9 is a diagram illustrating an example of a target region according to a second embodiment of the present invention;
FIG. 10 is a diagram illustrating an example of applying data according to a second embodiment of the present invention;
FIG. 11 is a diagram illustrating an application example of a liquid composition according to a second embodiment of the present invention;
FIG. 12 is a flowchart illustrating an example of the operation of an electrode producing apparatus according to a third embodiment of the present invention;
FIG. 13 is a diagram illustrating an example of applying data according to a third embodiment of the present invention;
FIG. 14 is a diagram illustrating an application example based on the applying data of FIG. 13;
FIG. 15 is a diagram illustrating an application example of a liquid composition according to Comparative Example; and
FIG. 16 is a diagram illustrating an application example of a liquid composition according to a fourth embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

Below, embodiments of the present disclosure are described with reference to accompanying drawings. In the drawings, like reference signs denote like elements, and overlapping description may be omitted where appropriate.

In describing embodiments illustrated in the drawings, specific terminology is employed for the sake of clarity.

Referring now to the drawings, embodiments of the present disclosure are described below.

The following embodiments exemplify a film forming apparatus, an electrode element, an electrochemical element, a secondary battery, and a film forming method for embodying the technical idea of the present disclosure.

The sizes and positional relations and the like of members illustrated in the drawings may be exaggerated to clarify the description.

### Embodiment

A film forming apparatus according to an embodiment forms a film on a base by applying a liquid onto the base based on applying data. The thickness of the film to be formed is not particularly limited as long as the film is formed in a layer shape on the base.

In the embodiment, an electrode producing apparatus will be described as an example of the film forming apparatus. This electrode producing apparatus uses a liquid composition for forming a resin layer or an inorganic layer to position-selectively form the resin layer or the inorganic layer so as to cover the surface of an electrode mixture layer formed on the surface of an electrode base. The electrode base is an example of the base, and the liquid composition is an example of the liquid.

First, the electrode base, the electrode mixture layer, the resin layer, the inorganic layer, and the liquid composition used in the electrode producing apparatus will be described.

### Electrode Base

The electrode base according to the embodiment is a conductive foil as a current collector having planarity. The electrode base can be suitably used for a secondary battery which is generally an electric storage device, a capacitor, in particular, a lithium ion secondary battery.

As the conductive foil, an aluminum foil, a copper foil, a stainless steel foil, a titanium foil, an etched foil having micro holes formed by etching these foils, and a perforated electrode base used for a lithium ion capacitor, and the like are used. As the electrode base, a carbon paper fibrous electrode used in a power generation device such as a fuel cell can be used in a nonwoven or woven planar form, or a perforated electrode base having micro holes can be used.

### Electrode Mixture Layer

The electrode mixture layer according to the embodiment is a layer containing an active material provided on the electrode base. The electrode mixture layer is formed by dispersing or dissolving a powdery active substance or a catalyst composition in a liquid, and applying the liquid onto the electrode base, followed by fixing and drying. In order to form the electrode mixture layer, a spray, a dispenser, a die coater, or pull-up coating or the like is used, and the electrode mixture layer is formed by drying after the application.

The electrode mixture layer is formed by dispersing or dissolving a powdery active substance or a catalyst composition in a liquid, and applying the liquid onto the electrode base, followed by fixing and drying. In order to form the electrode mixture layer, printing using a spray, a dispenser, a die coater, or pull-up coating is usually used, and the electrode mixture layer is formed by drying after the application.

Furthermore, when the electrode mixture layer is formed by on-demand printing such as electrophotography or liquid development type electrophotography, the electrode shape can be freely changed. Furthermore, when the electrode base is a thin conductive foil such as an aluminum foil, printing can be performed by controlling the position of a specific pattern in a non-contact manner. Therefore, it is preferable to perform printing by a liquid discharge method (inkjet method) using a liquid discharge head, or a method of a liquid discharge system such as a dispenser or a jet nozzle, and the liquid discharge method is particularly preferable.

A positive electrode active material is not particularly limited as long as the material is a material that can reversibly absorb and release alkali metal ions. Typically, an alkali metal-containing transition metal compound may be used as the positive electrode active material. Examples of a lithium-containing transition metal compound include a composite oxide containing lithium and at least one element selected from the group consisting of cobalt, manganese, nickel, chromium, iron, and vanadium. Examples of the composite oxide include lithium-containing transition metal oxides such as lithium cobaltate, lithium nickelate, and lithium manganate, olivine type lithium salts such as LiFePO4, chalcogen compounds such as titanium disulfide and molybdenum disulfide, and manganese dioxide.

The lithium-containing transition metal oxide is a metal oxide containing lithium and a transition metal or a metal oxide in which a part of the transition metal in the metal oxide is substituted with a different element. Examples of the different element include Na, Mg, Se, Y, Mn, Fe, Co, Ni, Cu, Zn, Al, Cr, Pb, Sb, and B. Among these, Mn, Al, Co, Ni, and Mg are preferable. The different element may be one kind or two or more kinds. These positive electrode active materials may be used alone or in combination of two or more. Examples of the active material in the nickel metal hydride battery include nickel hydroxide.

A negative electrode active material is not particularly limited as long as the material is a material that can reversibly absorb and release alkali metal ions. Typically, a carbon material containing graphite having a graphite type crystal structure may be used as the negative electrode active material. Examples of the carbon material include natural graphite, spherical or fibrous artificial graphite, non-graphitizable carbon (hard carbon), and easily graphitizable carbon (soft carbon). Examples of a material other than the carbon material include lithium titanate. From the viewpoint of increasing the energy density of a lithium ion battery, high capacity materials such as silicon, tin, silicon alloy, tin alloy, silicon oxide, silicon nitride, and tin oxide may also be suitably used as the negative electrode active material.

Examples of a hydrogen storing alloy as the active material in the nickel metal hydride battery include an AB2 type or A2B type hydrogen storing alloy represented by Zr-Ti-Mn-Fe-Ag-V-Al-W or Ti15Zr21V15Ni29Cr5Co5Fe1Mn8 or the like.

As a binder of a positive electrode or a negative electrode, for example, PVDF, polytetrafluoroethylene (PTFE), polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropolypropylene, styrene butadiene rubber, and carboxymethyl cellulose and the like can be used. Copolymers of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethylvinyl ether, acrylic acid, and hexadiene may also be used as the binder of the positive electrode or the negative electrode. Mixtures of two or more materials selected from these materials may be used.

Examples of a conductive agent to be contained in the electrode include graphites such as natural graphite and artificial graphite; carbon blacks such as acetylene black, ketjen black, channel black, furnace black, lamp black, and thermal black; conductive fibers such as carbon fiber and metal fiber; metal powders such as carbon fluoride and aluminum; conductive whiskers such as zinc oxide and potassium titanate; conductive metal oxides such as titanium oxide; and organic conductive materials such as phenylene derivatives and graphene derivatives.

In the active material in the fuel cell, as a catalyst for a cathode electrode or an anode electrode, a catalyst obtained by allowing a catalyst carrier such as carbon to carry metal fine particles made of platinum, ruthenium, or a platinum alloy or the like is generally used. In order to allow the surface of the catalyst carrier to carry the catalyst particles, for example, the catalyst support is suspended in water, and a precursor of the catalyst particles is added and dissolved in a suspension (containing alloy components such as chloroplatinic acid, dinitrodiamino platinum, platinum (II) chloride, platinum (I) chloride, bisacetylacetonatoplatinum, dichlorodiammine platinum, dichlorotetramine platinum, platinum (II) sulfate, chlororuthenium acid, chloroiridic acid, chlororhodic acid, ferric chloride, cobalt chloride, chromium chloride, gold chloride, silver nitrate, rhodium nitrate, palladium chloride, nickel nitrate, iron sulfate, and copper chloride). An alkali is added to produce a metal hydroxide and a catalyst carrier carrying the metal hydroxide on the surface of the catalyst carrier. The catalyst carrier is applied onto an electrode and reduced in a hydrogen atmosphere or the like to obtain an electrode having catalyst particles (active material) applied onto the surface.

### <Resin Layer or Inorganic Layer>

The resin layer or the inorganic layer is formed by initially forming a desired electrode pattern such as an insulating frame on the electrode base by a coating method having relatively accurate accuracy, such as screen printing, gravure coating, liquid discharge coating, or dispenser drawing. In the present embodiment, in particular, the resin layer or the inorganic layer is formed on the electrode mixture layer formed on the electrode base by discharging the liquid composition with the liquid discharge head. Thereafter, a slurry-like active material is applied onto the pattern and the resulting product is dried. As a result, even when the formation rate of the electrode mixture layer is extremely increased, or even when a relatively thick film is formed from a slurry having a limited viscosity, an active material having a desired size width in the subsequent drying step is constantly in contact with the electrode base. As a result, an intended coating dimension can be constantly realized, which is preferable.

Therefore, it is preferable that the properties required for the resin layer or the inorganic layer include accurate applicability and drying property of the resin layer or the inorganic layer with respect to the electrode base, and a property of being hardly dissolved in an electrolytic solution for use in the above-described active material or in an electrolytic solution for use in the finally obtained device. That is, the resin layer or the inorganic layer in the peripheral portion of the electrode mixture layer is an insulating film. The insulation property referred to herein preferably indicate an insulating property on an order of mega ohm [/cm] or more in a normal thickness direction. Since the insulation property of the resin layer or the inorganic layer needs to be maintained for a long period of time in the device, the resin layer or the inorganic layer needs to be hardly dissolved in the electrolytic solution. Therefore, it is difficult to realize these properties only with a resin dissolved in a normal organic solvent, and a resin group having a property not requiring crosslinking due to heat or ionizing radiation or the like after application is preferable. Alternatively, it is preferable that the inorganic material is fine particles having insulating properties that are dispersed in a solvent and form a film having an insulating property by being dried after the application. Furthermore, because there is a pressing step with a linear pressure of approximately 250 [kN] at maximum in the process of electrode machining, the resin layer and/or the inorganic layer preferably has resistance to the above-mentioned line pressure.

### Liquid Composition

Next, a liquid composition for producing the resin layer will be described. This liquid composition is formed by dissolving at least one of a resin and a precursor of the resin (a resin or a precursor of the resin) in a liquid.

As the resin and the precursor of the resin, those obtained by dissolving a resin and an oligomer having a crosslinkable structure in the molecule by ionizing radiation or infrared (heat) in an organic solvent acting as a liquid (organic solvent) are preferable. As the resin and the precursor of the resin, for example, a low molecular weight oligomer precursor of a polyimide resin, a polyester resin, a polyamide resin, a polyolefin resin, and an acrylic resin, or a part of the resin modified with a hydrocarbon group having an aliphatic unsaturated bond is preferable. For example, those having an unsaturated bond such as an allyl group, an allyloxy group, an acryloyl group, a butenyl group, a cinnamyl group, a cinnamoyl group, a crotaloyl group, a cyclohexadienyl group, an inpropenyl group, a methacryloyl group, a pentenyl group, a propenyl group, a styryl group, a vinyl group, or a butadienyl group, on a part of the side chain of the acrylic copolymer is preferable.

Furthermore, also for polybutylene terephthalate, polyethylene terephthalate, polyacrylonitrile, polyvinylidene fluoride, polyether ketone, polyethylene naphthalate, polysulfone, polyimide, polyester, polypropylene, polyoxymethylene, polyamide, polyvinyl pyrrolidone, and cellulose and the like, it is possible to increase insolubility and crosslinking property after fixing by using a relatively low molecular weight dispersion precursor or cellulose nanofiber having a molecular weight of 10,000 or less and heating them with ionizing radiation or infrared ray.

Furthermore, in order to enhance the crosslinking property of these precursors, the precursors may contain a maximum of approximately 30 parts by weight of an azide compound. Examples of the azide compound include 3,3'-dichloro-4,4'-diazidodiphenylmethane, 4,4'-diazidodiphenyl ether, 4,4'-diazidodiphenyl disulfide, 4,4'-diazidodiphenyl sulfide, 4,4'-diazidodiphenylsulfone, 4-azidochalcone, 4-azido-4'-hydroxychalcone, 4-azido-4'-methoxychalcone, 4-azido-4'-morpholinochalcone, 4-dimethylamino-4'-azidochalcone, 2,6-bis(4'-azidobenzal)-4-methylcyclohexanone, 2,6-bis(4'-azidobenzal)-cyclohexanone, cinnamylidene-4-azidoacetophenone, 4-azidocinnamylidene acetophenone, 4-azido-4'-dimethylaminocinnamylidene acetophenone, cinnamylidene-4-azidocinnamylidene acetone, 2,6-bis(4'-azidocinnamylidene)-4-methylcyclohexanone, 2,6-bis(4'-azidocinnamylidene)-cyclohexanone, 1,4'-azidobenzylidene indene, 1,4'-azidobenzylidene indene, 1,4'-azidobenzylidene-3-α-hydroxy-4"-azidobenzylindene, 9,4'-azidobenzylidenefluorene, 9,4'-azido cinnamylidene fluorene, 4,4'-diazidostilbene-2,2'-disulfonyl-N-(p-methoxyphenyl)amide, 4,4'-diazidostilbene-2,2'-disulfonyl-N-(p-hydroxyethylphenyl)amide, 4,4'-diazidostilbene-2,2'-disulfonyl-N-(p-hydroxyphenyl)amide, 4,4'-diazidostilbene-2,2'-disulfonylamide, 4,4'-diazidobenzophenone, 4,4'-diazidostilbene, 4,4'-diazidochalcone, 4,4'-diazidobenzalacetone, 6-azido-2-(4'-azidostyryl)benzimidazole, 3-azidobenzylideneaniline-N-oxy-p(4-azidobenzylideneamido)benzoic acid, 1,4-bis(3'-azi-1-ζ-styryl)benzene, 3,3'-diazidodiphenylsulfone, and 4,4'-diazidodiphenylmethane.

Among these, in particular, 2.6-bis-(4'-azidobenzal)-4-methylcyclohexanone and the like may be suitably used. Solvents that dissolve these materials are not particularly specified, but those capable of dissolving the compounds and having a boiling point and surface tension suitable for subsequent coating or drying step may be prepared by using them alone or in combination.

The resin layer or the inorganic layer may be initially formed on the periphery (frame region) of a region where the electrode mixture layer is to be formed on the electrode base, and a slurry-like active material may be applied onto the electrode base on which the resin layer or the inorganic layer has been formed in the frame region and dried. As a result, even when the formation rate of the electrode mixture layer is extremely increased, or even when a relatively thick film is formed from a slurry having a limited viscosity, it is possible to form an active material having a desired size width to be constantly in contact with the electrode base in the subsequent drying step. As a result, an intended coating dimension can constantly be realized, which is preferable. Therefore, it is preferable that the properties required for the resin layer or the inorganic layer include accurate applicability and drying property of the resin layer or the inorganic layer with respect to the electrode base, and a property of being hardly dissolved in an electrolytic solution for use in the active material or in an electrolytic solution for use in the finally obtained device. That is, the resin layer or the inorganic layer in the peripheral portion of the electrode mixture layer is an insulating film.

### General Arrangement Example of Electrode Producing Apparatus 100

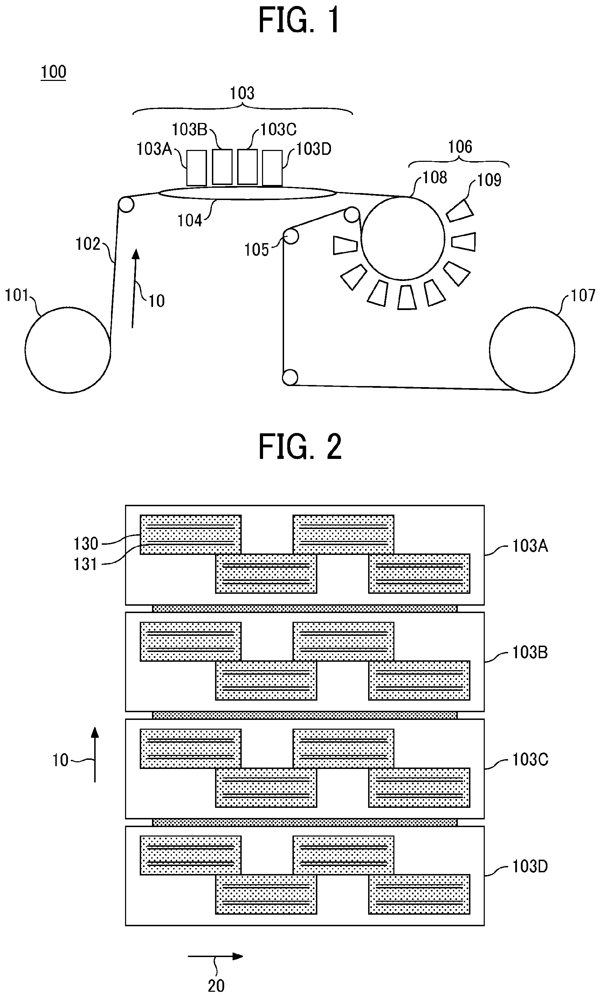

Next, the general arrangement of an electrode producing apparatus 100 according to the embodiment will be described. FIG. 1 is a diagram illustrating the general arrangement of the electrode producing apparatus 100. FIG. 1 illustrates the inside of the electrode producing apparatus 100 as viewed through the electrode producing apparatus 100 in a direction substantially perpendicular to the conveyance direction 10 of an electrode base 102.

As illustrated in FIG. 1, the electrode producing apparatus 100 includes an unwinding unit 101, a liquid applying unit 103, a platen 104, a conveying roller 105, a drying unit 106, and a winding unit 107. These are provided in order from upstream to downstream in the conveyance direction 10 of the electrode base 102.

The electrode producing apparatus 100 applies the liquid composition discharged from the liquid applying unit 103 onto the electrode base 102 while the unwinding unit 101, the conveying roller 105, and the winding unit 107 (serving as a conveyance unit) and the like convey the electrode base 102, and forms a film of the liquid composition on the electrode base 102.

The electrode base 102 is a substrate that is continuous in the conveyance direction 10. The electrode producing apparatus 100 conveys the electrode base 102 in a conveyance path between the unwinding unit 101 and the winding unit 107. The length of the electrode base 102 in the conveyance direction 10 is at least longer than the conveyance path between the unwinding unit 101 and the winding unit 107. The electrode producing apparatus 100 can continuously form a film on the electrode base 102 that is continuous in the conveyance direction 10.

The unwinding unit 101 rotates the electrode base 102 stored in a roll shape to supply the electrode base 102 to the conveyance path of the electrode producing apparatus 100.

The liquid applying unit 103 includes head units 103A, 103B, 103C, and 103D in the conveyance direction 10 of the electrode base 102. The liquid applying unit 103 discharges the liquid composition from the head units 103A, 103B, 103C, and 103D, and applies the liquid composition to the electrode base 102.

The head units 103A, 103B, 103C, and 103D are provided so as to face the platen 104 with the electrode base 102 to be conveyed interposed therebetween, and discharge the liquid composition toward the electrode base 102 by a liquid discharge method. The number of the head units is not limited to four, and the liquid applying unit 103 may include any number of head units in the conveyance direction 10.

The platen 104 is a member that guides the electrode base 102 to be conveyed in the conveyance path.

The conveying roller 105 rotates itself while supporting the electrode base 102 to convey the electrode base 102 in the conveyance direction 10. In addition to the conveying roller 105, the electrode producing apparatus 100 includes a roller or the like denoted by no reference numeral as a conveying unit.

An application speed in the electrode producing apparatus 100 is preferably 30 [m/min] to 100 [m/min] in that a film is formed at a high speed although the application speed is related to other steps. The application speed refers to a speed at which the liquid composition is applied onto the electrode base 102 while the electrode base 102 is conveyed.

The drying unit 106 includes a heat drum 108 and a hot air drying unit 109. The drying unit 106 dries the liquid composition applied onto the electrode base 102 using the heat drum 108 and the hot air drying unit 109.

The heat drum 108 is a rotatable drum, and adjusts the temperature of the electrode base 102 while conveying the electrode base 102 in contact with the outer peripheral surface of the heat drum 108.

The heat drum 108 contains a liquid or a gas as a heat exchange medium. The heat drum 108 has valves at both ends of the heat drum 108 in the width direction of the electrode base 102 intersecting the conveyance direction 10. The heat drum 108 sucks the liquid or the gas via the valves, and discharges the liquid or the gas to the outside, to circulate the liquid or the gas between the heat drum 108 and an external apparatus such as a chiller, thereby maintaining the heat exchange medium at a predetermined temperature.

The heat drum 108 heats or cools the electrode base 102 by mutual heat exchange between the heat exchange medium contained in the heat drum 108 and the electrode base 102 in contact with the outer peripheral surface of the heat drum 108 to adjust the temperature of the electrode base 102 to a predetermined temperature.

The liquid flowing into the heat drum 108 is not particularly limited as long as the liquid has fluidity such as water or oil, but water that is easy to handle is desirable. As the gas flowing into the heat drum 108, it is desirable to use heated air in terms of cost and safety.

As a method in which the temperature of the electrode base 102 is adjusted by the heat drum 108, a method in which the electrode base 102 is heated by heat generated by a heat source device provided inside the heat drum 108 can also be applied in addition to a method in which a heat exchange medium is used. As the heat source device provided in the heat drum 108, a halogen heater, an infrared heater, or a nichrome heater or the like can be used.

The hot air drying unit 109 includes nozzles provided such that the nozzles face the outer peripheral surface of the heat drum 108. The nozzles extend in the width direction of the electrode base 102 and have respective openings. The hot air drying unit 109 blows hot air from the nozzles onto the electrode base 102 wound around the heat drum 108 to heat the electrode base 102, thereby drying the liquid composition on the electrode base 102.

The drying unit 106 may further include an infrared heater that irradiates the surface of the electrode base 102 with infrared rays to dry the liquid composition on the electrode base 102. The drying unit 106 may include an infrared heater instead of the hot air drying unit 109.

The temperature adjusted by the heat drum 108, and the temperature and wind speed of the hot air in the hot air drying unit 109 are preferably set within appropriate ranges according to the drying property of the solvent contained in the liquid composition, and the damage inflicted on the electrode base 102, and the like. By this setting, the power consumption required for drying can be reduced.

The winding unit 107 winds up the electrode base 102 on which the film has been formed by applying the liquid composition and stores the electrode base in a roll shape.

### Detailed Configuration Example of Liquid Applying Unit 103

FIG. 2 is a diagram illustrating the detailed configuration of the liquid applying unit 103, and is a plan view of the liquid applying unit 103 as viewed from the discharge direction of the liquid composition by the head units 103A, 103B, 103C, and 103D.

Each of the head units 103A, 103B, 103C, and 103D includes four heads 130 in the width direction 20 of the electrode base 102. The head 130 includes a plurality of nozzle arrays 131 in which a plurality of nozzles are arranged in the width direction 20 of the electrode base 102. The head 130 discharges the liquid composition from each of the plurality of nozzles.

The heads 130 of the head units 103A, 103B, 103C, and 103D may have the same configuration, or may have a partially different configuration.

In the liquid applying unit 103, the head units 103A, 103B, 103C, and 103D constitute a line-type liquid discharge head unit. The line-type liquid discharge head refers to a head in which a plurality of nozzles each discharging a liquid composition is disposed over substantially the overall width of the electrode base 102 in the width direction 20. However, the width of the liquid applying unit 103 in the width direction 20 is not necessarily the overall width of the electrode base 102, and can be appropriately determined according to the specifications and the like of the electrode produced by the electrode producing apparatus 100. The number of the head units included in the liquid applying unit 103 and the number of the heads included in the head unit can also be appropriately selected according to the width of the liquid applying unit 103 in the width direction 20.

In the electrode producing apparatus 100, in order to form a film at a high speed on the electrode base 102, the liquid composition is preferably discharged by a liquid discharge method using a line-type liquid discharge head unit.

Meanwhile, in the electrode producing apparatus 100, since a film is continuously formed for a long period of time, some nozzles may not discharge the liquid composition for a long period of time depending on the form of the film when a line-type liquid discharge head unit is used. In a nozzle that does not discharge a liquid composition, discharge abnormality may occur when liquid composition components become non-uniform due to the drying of the liquid composition exposed to the outside through the nozzle or due to the settling of particle components in the liquid composition. Therefore, in the liquid application step, it is preferable to vibrate the interface of the liquid composition in the nozzle that does not discharge a liquid composition and to constantly circulate the liquid composition in the head 130. The interface of the liquid composition refers to the interface of the liquid composition exposed to the atmosphere or a gas through the nozzle.

The electrode producing apparatus 100 can make the liquid composition exposed to the outside through the nozzle and the liquid composition components in the flow path in the head 130 substantially uniform under the interface vibration of the liquid composition and the constant circulation of the liquid composition. The electrode producing apparatus 100 makes the liquid composition components substantially uniform, which makes it possible to suppress the nonuniformity of the liquid composition in the head 130 to reduce abnormal film formation due to discharge abnormality.

In the head 130, a unit for applying a stimulus to the liquid composition to discharge the liquid composition can be appropriately selected according to the purpose. For example, a pressurizing apparatus, a piezoelectric element, a vibration-generating apparatus, an ultrasonic wave oscillator, or a light or the like can be used. Specific examples of the unit include a piezoelectric actuator such as a piezoelectric element, a shape memory alloy actuator using metal phase change due to a temperature change, and a static actuator using an electrostatic force.

Among the above, in particular, a unit that applies a voltage to a piezoelectric element bonded to a position called a pressure chamber (also referred to as a liquid chamber or the like) in the flow path of the liquid composition in the head 130 is preferable. In the head 130 including the piezoelectric element, the piezoelectric element is deflected by the application of the voltage, and the volume of the pressure chamber is reduced to increase the pressure of the liquid composition in the pressure chamber and to discharge the liquid composition as droplets from the nozzle.

The head 130 may include a liquid discharge module. The liquid discharge module refers to an assembly of functional parts or mechanisms related to the discharge of the liquid composition from the head 130. Examples of the liquid discharge module include a supply mechanism, a maintenance recovery mechanism, and a head moving mechanism.

### Configuration Example of Control Unit 400

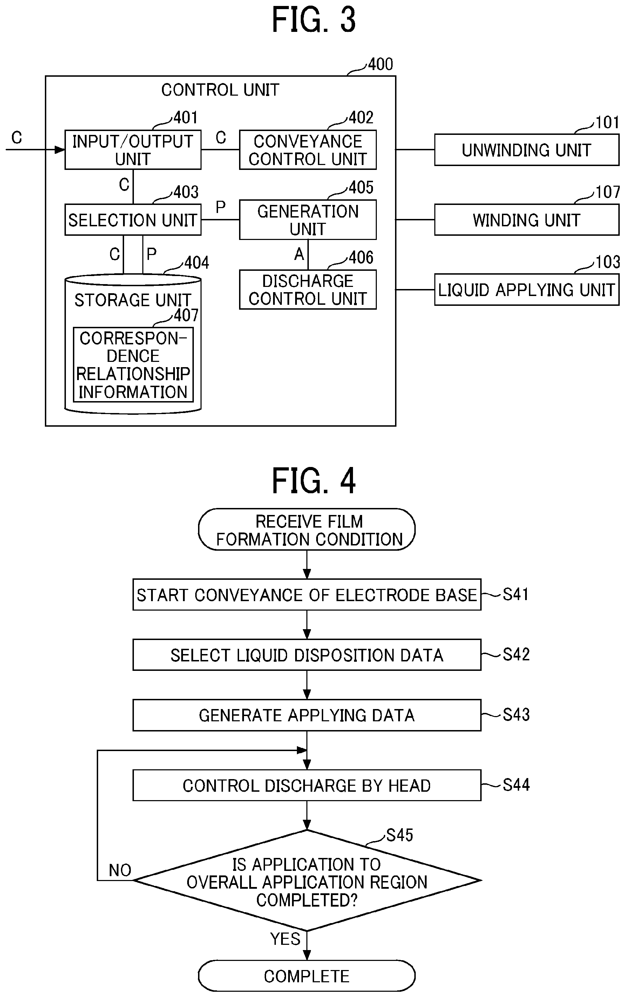

Next, the configuration of a control unit 400 included in the electrode producing apparatus 100 will be described with reference to FIG. 3. FIG. 3 is a block diagram illustrating the functional configuration of the control unit 400.

The control unit 400 is a structural unit for controlling the operation of the electrode producing apparatus 100, and is constructed by a control board or a computer or the like. The control board and the computer include at least one electric circuit, a memory such as a read only memory (ROM) or a random access memory (RAM), or a central processing unit (CPU) or the like.

The position of the control unit 400 to be disposed is not particularly limited, and the control unit 400 can be disposed at any position of the electrode producing apparatus 100. The control unit 400 may be remotely disposed at a position away from the main body of the electrode producing apparatus 100 including the liquid applying unit 103 and the like.

As illustrated in FIG. 3, the control unit 400 includes an input/output unit 401, a conveyance control unit 402, a selection unit 403, a storage unit 404, a generation unit 405, and a discharge control unit 406.

The control unit 400 may be an electric circuit that implements the functions of the input/output unit 401, the conveyance control unit 402, the selection unit 403, the generation unit 405, and the discharge control unit 406, and may also be software (CPU) that implement a part of these functions. The control unit 400 may be a plurality of circuits or a plurality of pieces of software that implement these functions. The control unit 400 may be a memory such as a hard disk drive (HDD) that implements the function of the storage unit 404.

A part of the functional structural units may be implemented by a structural unit other than the control unit 400. A part of the functional structural units may be implemented by the distributed processing of the control unit 400 and the structural unit other than the control unit 400. The structural unit other than the control unit 400 is, for example, the liquid applying unit 103, an external personal computer (PC), and an external server via a network, and the like.

The input/output unit 401 has an interface function of performing communication between the external apparatus and the control unit 400. In the present embodiment, the input/output unit 401 inputs a film forming condition C from the external apparatus such as the external PC.

The film forming condition refers to information for determining the amount of the liquid composition discharged from the head 130. For example, the film forming condition C is information such as the thickness of the film formed by the electrode producing apparatus 100 and the volume or weight of the liquid composition per unit area on the electrode base 102, but is not limited to the information.

The conveyance control unit 402 controls the conveyance of the electrode base 102 based on the film forming condition C input via the input/output unit 401. The conveyance control unit 402 can control the conveyance start timing, the conveyance completing timing, and the conveyance speed and the like of the electrode base 102 by controlling the unwinding operation of the electrode base 102 by the unwinding unit 101 and the winding operation of the electrode base 102 by the winding unit 107.

The selection unit 403 selects liquid disposition data P with reference to correspondence relationship information 407 based on the film forming condition C input via the input/output unit 401.

The correspondence relationship information 407 is information indicating a correspondence relationship between the film forming condition C and the liquid disposition data P or information related to the correspondence relationship. The correspondence relationship information 407 is determined in advance and stored in the storage unit 404. The selection unit 403 can acquire the liquid disposition data P by selecting the liquid disposition data P corresponding to the film forming condition C.

The generation unit 405 generates applying data A by repeatedly arranging predetermined liquid disposition data P indicating the applying position of the liquid composition in a predetermined region on the electrode base 102.

The applying data A is data to be a source of applying the liquid composition to the overall target region which is a region to be applied with the liquid composition by the electrode producing apparatus 100. The liquid disposition data P is data to be a source of applying the liquid composition to a predetermined region that is a part of the target region. Both the applying data A and the liquid disposition data P can also be said to be data indicating the disposition pattern of the liquid composition on the electrode base 102.

In the present embodiment, the generation unit 405 generates the applying data A by repeatedly arranging the liquid disposition data P by tiling processing. The tiling processing refers to processing of arranging and joining a plurality of pieces of liquid disposition data P so as not to overlap each other.

The discharge control unit 406 controls the discharge of the liquid composition by the head 130 included in the liquid applying unit 103 based on the applying data A generated by the generation unit 405. For example, the discharge control unit 406 can transfer the applying data A to the liquid applying unit 103, to control the selection of a nozzle for discharging the liquid composition from the plurality of nozzles included in the liquid applying unit 103, the timing of discharging the liquid composition from the nozzle, and the amount of the liquid composition discharged from the nozzle, and the like.

### Processing Example by Control Unit 400

FIG. 4 is a flowchart illustrating processing by the control unit 400 according to the embodiment. The control unit 400 starts the processing of FIG. 4 with a timing at which a film forming condition is input from an external device such as an external PC as a trigger. Alternatively, the control unit 400 may start the processing of FIG. 4 with a timing at which the electrode producing apparatus 100 receives, as a trigger, an instruction to start film formation through an operation by a user of the electrode producing apparatus 100 (hereinafter, simply referred to as a user) using an operation unit of the electrode producing apparatus 100.

First, in step S41, the control unit 400 causes a conveyance control unit 402 to start the conveyance of an electrode base 102 based on a film forming condition C input via an input/output unit 401. As long as there is no conveyance stop instruction based on the film forming condition C, the conveyance control unit 402 continuously conveys the electrode base 102 without stopping the film forming operation of the electrode producing apparatus 100 until the film forming operation is completed.

Subsequently, in step S42, the control unit 400 causes a selection unit 403 to select liquid disposition data P with reference to correspondence relationship information 407 stored in a storage unit 404 based on the film forming condition C input via the input/output unit 401. The order of the processing in steps S41 and S42 may be appropriately changed, or both the steps may be performed in parallel.

Subsequently, in step S43, the control unit 400 causes a generation unit 405 to repeatedly arrange the liquid disposition data P selected by the selection unit 403 to generate applying data A.

Subsequently, in step S44, the control unit 400 causes a discharge control unit 406 to control the discharge of the liquid composition by a plurality of heads 130 included in a liquid applying unit 103 based on the applying data A generated by the generation unit 405. The liquid composition discharged from the plurality of heads 130 is applied to a desired position on the electrode base 102.

Subsequently, in step S45, the control unit 400 determines whether or not the application of the liquid composition to the overall target region has been completed. The control unit 400 can determine whether or not the application of the liquid composition has been completed based on the film forming condition C or in response to an instruction to complete film formation by a user.

If the control unit 400 determines that the application of the liquid composition has been completed in step S45 (Yes in step S45), the control unit 400 stops the operation of each structural unit of the electrode producing apparatus 100, and then completes the processing. Meanwhile, if the control unit 400 determines that the application of the liquid composition has not been completed (No in step S45), the control unit 400 performs the processing of step S44 and subsequent steps again.

As described above, the control unit 400 can control the film formation by the electrode producing apparatus 100.

### One Example of Liquid Disposition Data P

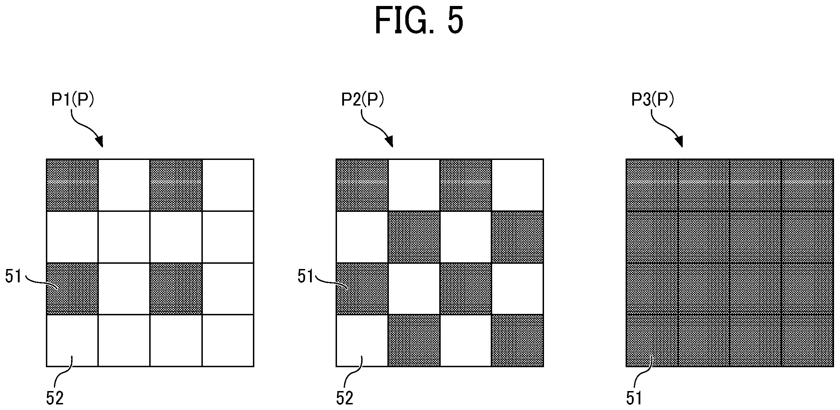

FIG. 5 is a diagram illustrating the liquid disposition data P in the electrode producing apparatus 100. FIG. 5 illustrates liquid disposition data P1 as a first example of the liquid disposition data P, liquid disposition data P2 as a second example, and liquid disposition data P3 as a third example.

As illustrated in FIG. 5, the liquid disposition data P is represented as an image pattern that is an assembly of a total of M×N pixels in which M pixels are arranged in a longitudinal direction and N pixels are arranged in a lateral direction. The longitudinal direction corresponds to a conveyance direction 10, and the lateral direction corresponds to a width direction 20. FIG. 5 illustrates an image pattern that is an assembly of a total of 16 pixels with M=4 and N=4, but the image pattern of the present disclosure is not limited thereto. The number of the pixels in the longitudinal and lateral directions can be optionally determined.

A pixel 51 indicated by dot hatching corresponds to a position where the liquid composition is applied onto the electrode base 102, and a pixel 52 indicated by white corresponds to a position where the liquid composition is not applied onto the electrode base 102. In FIG. 5, the liquid disposition data P is expressed by two pixel values corresponding to the application or non-application of the liquid composition, but the liquid disposition data P of the present disclosure is not limited thereto. The liquid disposition data P may be expressed by three or more multi pixel values. For example, in the case of ternary expression, the liquid disposition data P is expressed by three types of pixel values of the application of droplets having a large volume, the application of droplets having a small volume, and non-application by the liquid composition discharged from the head 130.

The liquid disposition data P1 is liquid disposition data of an applying ratio of 25% in which the liquid composition is applied to 25% of a region on the electrode base 102 corresponding to one of liquid disposition data P. The applying ratio refers to an area ratio of the liquid composition applied per unit area. Similarly, the liquid disposition data P2 is liquid disposition data with an applying ratio of 50%, and the liquid disposition data P3 is liquid disposition data with an applying ratio of 100%. However, it is not an object of the present invention to set the applying ratio to 100 [%] since the film thickness is controlled by having a region not applied.

The electrode producing apparatus 100 can control the thickness of the film formed on the electrode base 102 according to the applying ratio. For example, the electrode producing apparatus 100 can form a thinner film on the electrode base 102 as the applying ratio is lower.

### First Embodiment

### Application Example According to First Embodiment

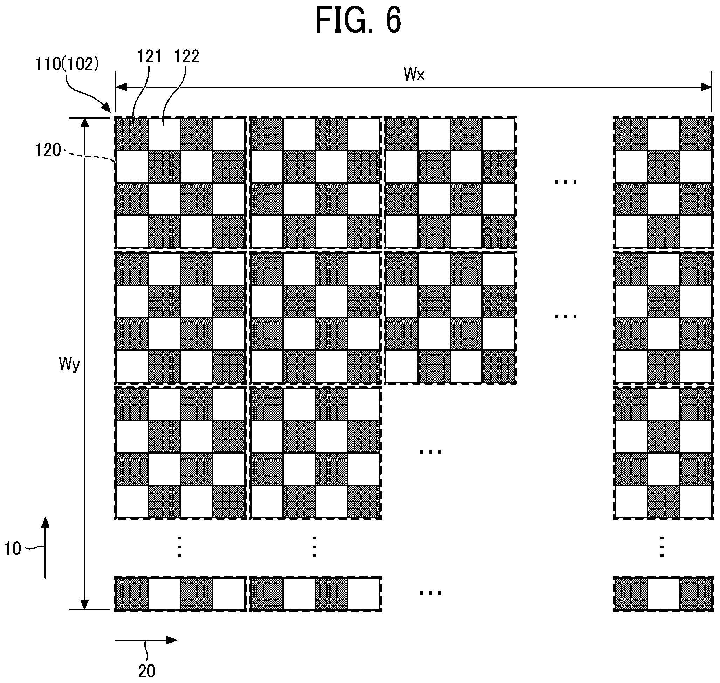

FIG. 6 is a diagram illustrating the application example of the liquid composition according to the first embodiment, and is a plan view of a coating film object 110 as viewed from the normal direction of the coating film object 110. The coating film object 110 includes an electrode base 102 on which a film is formed by applying a liquid composition. Since the electrode base 102 is included in the coating film object 110, the reference sign of the electrode base 102 is shown in parentheses with respect to the reference sign of the coating film object 110 in FIG. 6.

The coating film object 110 can constitute a part of an electrode element. Here, the electrode element means an element in which electrodes are not stacked and which is not packaged. The electrode element is used for an electrochemical element such as a capacitor, and a secondary battery, and the like.

The coating film object 110 has a width Wx in a width direction 20 and a length Wy in a conveyance direction 10. A predetermined region 120 indicated by a broken line is a region to which the liquid composition is applied based on one of liquid disposition data P. The predetermined region 120 includes a first coating film region 121 to which the liquid composition is applied and a second coating film region 122 to which the liquid composition is not applied. Since the liquid composition applied to the first coating film region 121 spreads on the electrode base 102, the liquid composition is not necessarily absent in the second coating film region 122.

The plurality of predetermined regions 120 are formed by tiling in the conveyance direction 10 and the width direction 20 based on applying data A generated by the tiling processing of a plurality of liquid disposition data P, whereby a film is formed in the overall target region. FIG. 6 illustrates a film formed based on liquid disposition data P2 with an applying ratio of 50%, but the same applies to the case of forming a film based on liquid disposition data P with an applying ratio other than the applying ratio of 50%.

As described above, since the predetermined region 120 is formed by repeatedly arranging the liquid disposition data P, the first coating film region 121 and the second coating film region 122 are alternately and periodically formed on the formed film. The period of the first coating film region 121 and the second coating film region 122 varies depending on a coating film ratio, but is equal to or less than the length of one side of the liquid disposition data P. For example, when the size of liquid disposition data P including 4×4 pixels as illustrated in FIG. 5 is 85 [µm]×85 [µm], the period of the pattern including the first coating film region 121 and the second coating film region 122 is 85 [µm] or less.

When the width Wy is not an integral multiple of the length of the predetermined region 120 in the conveyance direction 10, a part of the predetermined region 120 is not formed in accordance with the width Wy. Similarly, when the width Wx is not an integral multiple of the length of the predetermined region 120 in the width direction 20, a part of the predetermined region 120 is not formed in accordance with the width Wx.

Here, the coating film object 110 including the first coating film region 121 in which the film is formed on the electrode base 102 and the second coating film region 122 will be described. The coating film object 110 is an example of an electrode. The first coating film region 121 and the second coating film region 122 are alternately and periodically provided in a predetermined direction. The predetermined direction is preferably the conveyance direction 10 of the coating film object 110 or the width direction 20 of the coating film object 110.

The first coating film region 121 and the second coating film region 122 can be distinguished by observing the coating film surface of the coating film object 110 using a microscope, but are more preferably distinguished by either a method in which an image obtained by imaging the coating film surface of the coating film object 110 is binarized, or a method in which the film thickness of the coating film object 110 is measured from the cross section of the coating film object 110.

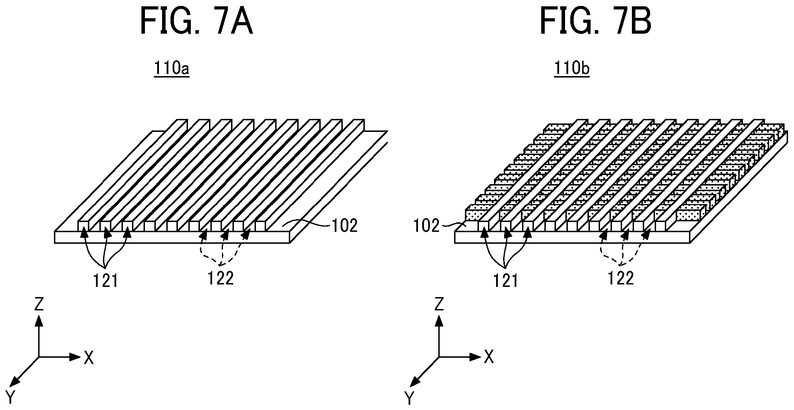

FIGS. 7A and 7B are schematic diagrams of electrodes including a first coating film region and a second coating film region, FIG. 7A is a diagram of a first example, and FIG. 7B is a diagram of a second example.

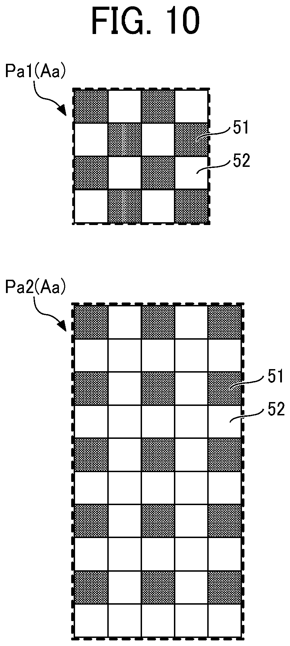

As illustrated in FIG. 7A, in a coating film object 110a according to the first example, on an electrode base 102, a pixel (application pixel) position where a droplet is applied in a Y direction is continuous, and a droplet application pixel position and a non-application pixel position are alternately switched in an X direction. As illustrated in FIG. 10B, in a coating film object 110b according to the second example, a droplet application pixel position and a non-application pixel position are alternately switched in each of an X direction and a Y direction on an electrode base 102. A first coating film region 121 indicated by a solid arrow corresponds to the droplet application pixel position. A second coating film region 122 indicated by a broken line arrow corresponds to the non-application pixel position. The second coating film region 122 is the non-application pixel position, but droplets protruding from the first coating film region 121 are present.

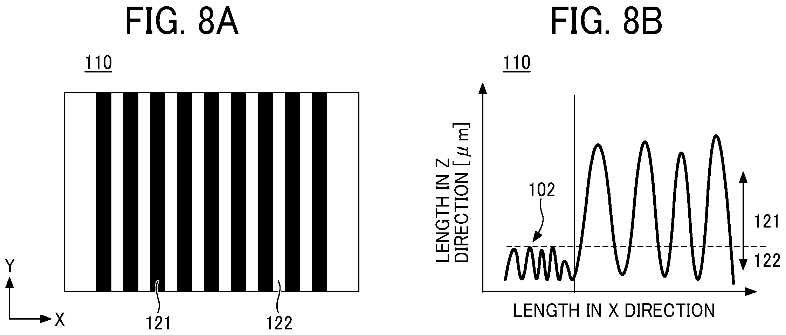

FIGS. 8A and 8B are diagrams illustrating a method for forming a coating film object 110 including a first coating film region and a second coating film region. FIG. 8A is a diagram illustrating a method using a binarized image, and FIG. 8B is a diagram illustrating a method using the measurement result of a cross-sectional shape.

FIG. 8A illustrates an example of an image obtained by binarizing an image of the coating film object 110 imaged (the coating film surface imaged) by a microscope or the like from above. In this method, in the binarized image data, data corresponding to white is set as a second coating film region 122, and data corresponding to black is set as a first coating film region 121. Thereby, the coating film region is bifurcated. The allocation of the coating film region corresponding to each of white and black data is an example, and black and white may be inverted. The imaged data is color data or grayscale data, and generally has 256 gradations per plate. As a threshold value for binarization, it is desirable to use either a median value or an average value in the distribution of a scale representing brightness (for example, brightness or luminance).

FIG. 8B illustrates the cross-sectional shape of the coating film object 110. In this method, a region exceeding a predetermined height in height distribution in the shape of the coating film object 110, for example, a region higher than the electrode base 102 is defined as the first coating film region 121, and a region having a height equal to or less than the predetermined height, for example, the same height as the height of the electrode base 102 is defined as the second coating film region 122. In FIG. 8B, the predetermined height is the maximum value of the height distribution in the electrode base 102 as an example, but the median value or the average value may be used. The direction and range in which the height position is acquired are set so as to include a plurality of first coating film regions 121 and a plurality of second coating film regions 122.

Here, a method for confirming the presence or absence of periodicity in the first coating film region 121 and the second coating film region 122 will be described. The presence or absence of periodicity in the disposition of the first coating film region 121 and the second coating film region 122 can be determined, for example, by observing the coating film surface of the coating film object 110 using a microscope. More preferably, the determination can be made using a method for analyzing a frequency component obtained by Fourier-transforming an image obtained by imaging the coating film surface of the coating film object 110, or a method for analyzing a frequency component obtained by Fourier-transforming the measurement result of the cross-sectional shape of the coating film object 110, or the like.

When an image obtained by photographing the coating film surface of the coating film object 110 is used, the contrast of image data (color data, grayscale data, or data obtained by binarizing any of the color data and the grayscale data) is Fourier-transformed.

When the measurement result of the cross-sectional shape of the coating film object 110 is used, Fourier transform is performed using the transition of height data as waveform data. For the Fourier transform, discrete Fourier transform (DFT) or fast Fourier transform (FFT) may be used, but the fast Fourier transform is preferable from the viewpoint of speeding up processing.

### Operation and Effect of Electrode Producing Apparatus 100

As described above, the electrode producing apparatus 100 forms the film on the electrode base 102 by applying the liquid composition (liquid) onto the electrode base 102 (base) based on the applying data A. The electrode producing apparatus 100 includes the control unit 400 that generates the applying data A by repeatedly arranging the predetermined liquid disposition data P representing the applying position of the liquid composition in the predetermined region 120 on the electrode base 102, and the head 130 that discharges the liquid composition based on the applying data A generated by the control unit 400.

In the present embodiment, by forming the film including the first coating film region 121 and the second coating film region 122 on the electrode base 102 based on the applying data A, the thickness of the film can be controlled according to the applying ratio of the liquid composition, whereby the film forming apparatus that can form a film having a controlled film thickness and excellent quality can be provided. In particular, when a film having a uniform thickness is formed on the electrode base 102 having a large area, a remarkable effect can be obtained. The film to be formed includes the second coating film region 122 to which the liquid composition is not applied, but since the area of the second coating film region 122 is very small, the function of the film and the function of the coating film object 110 on which the film is formed are not affected.

In the present embodiment, the control unit 400 causes the selection unit 403 to select the liquid disposition data P based on the film forming condition C.

For example, when the liquid disposition data is selected for each pixel included in the applying data, the number of times of repeating the selection processing increases as the number of pixels increases, and thus the processing time increases and the processing load increases. As the area of the overall target region increases, the processing time and the processing load increase.

In the present embodiment, since the number of types of the film forming condition C is extremely smaller than the number of pixels included in the applying data A, the number of times of performing the selection processing of the liquid disposition data P can be reduced, the processing time can be shortened, and the processing load can be reduced.

The present embodiment includes the storage unit 404 that stores the correspondence relationship information 407 between the film forming condition C and the liquid disposition data P. The control unit 400 selects the liquid disposition data P with reference to the storage unit 404 based on the film forming condition C.

For example, when the liquid disposition data is selected for each pixel included in the applying data, it is necessary to store the liquid disposition data corresponding to the types of the pixel value. For example, when the pixel value has 256 gradations, a memory that can store at least 256 liquid disposition data is required. The storage capacity of the storage unit increases according to the number of the liquid disposition data to be stored, and the cost of the electrode producing apparatus and the size of the storage unit increase.

In the present embodiment, since the number of types of the film forming condition C is extremely smaller than the number of the types of the pixel value, the number of the liquid disposition data stored in the storage unit 404 can be reduced, and the storage capacity of the storage unit can be reduced. As a result, it is possible to prevent an increase in the cost of the electrode producing apparatus and the size of the storage unit.

### Second Embodiment

Next, an application example of a liquid composition according to a second embodiment will be described. The same constituent elements as the constituent elements in the first embodiment are denoted with the same reference numerals, and redundant description will be omitted as appropriate. The same applies to other embodiments described below.

### One Example of Target Region 140

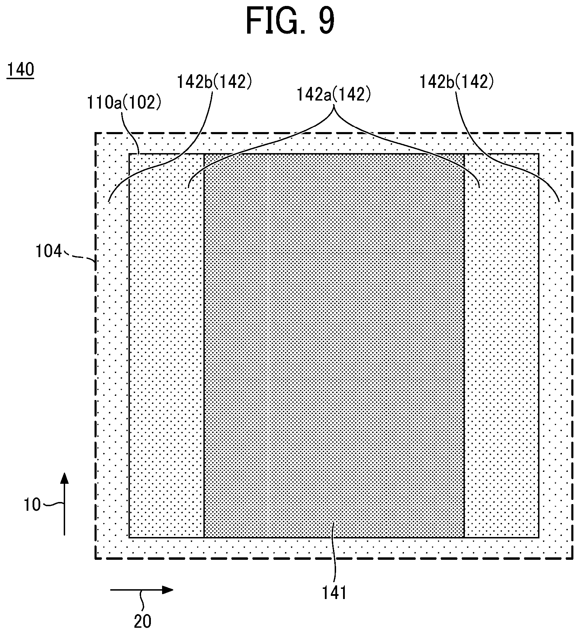

FIG. 9 is a diagram illustrating a target region 140 according to the second embodiment. As illustrated in FIG. 9, the target region 140 includes a first target region 141 and a second target region 142 different from first target region 141.

The first target region 141 includes a partial region on an electrode base 102. The second target region 142 includes a base region 142a other than the first target region 141 on the electrode base 102 and a platen region 142b on which the electrode base 102 is not placed on a platen 104.

### One Example of Applying data Aa

FIG. 10 is a diagram illustrating applying data Aa according to the second embodiment. The applying data Aa is generated including a plurality of first liquid disposition data Pa1 and a plurality of second liquid disposition data Pa2. FIG. 10 illustrates one first liquid disposition data Pa1 of the plurality of first liquid disposition data Pa1 and one second liquid disposition data Pa2 of the plurality of second liquid disposition data Pa2.

The first liquid disposition data Pa1 is data for applying the liquid composition to the first target region 141. The second liquid disposition data Pa2 is data for applying the liquid composition to the second target region 142.

The first liquid disposition data Pa1 includes a total of 16 pixels including 4 pixels in a longitudinal direction and 4 pixels in a lateral direction. The second liquid disposition data Pa2 includes a total of 40 pixels including 10 pixels in a longitudinal direction and 4 pixels in a lateral direction. The data size of the first liquid disposition data Pa1 is different from the data size of the second liquid disposition data Pa2, and the data size of the second liquid disposition data Pa2 is larger than the data size of the first liquid disposition data Pa1.

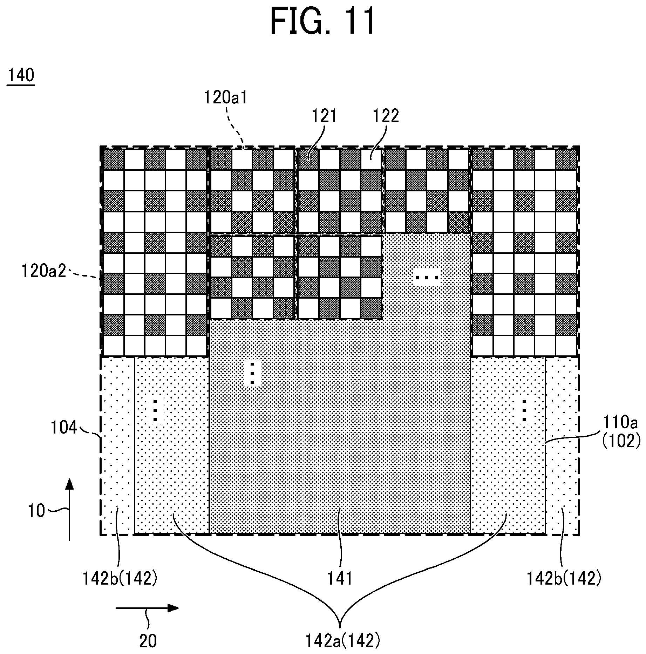

FIG. 11 is a diagram illustrating an example of applying the liquid composition to the target region 140. One first predetermined region 120a1 is a region to which the liquid composition is applied based on one first liquid disposition data Pa1. One second predetermined region 120a2 is a region to which the liquid composition is applied based on one second liquid disposition data Pa2. A plurality of first predetermined regions 120a1 are formed in the first target region 141 based on the plurality of first liquid disposition data Pa1, and a plurality of second predetermined regions 120a2 are formed in the second target region 142 based on the plurality of second liquid disposition data Pa2.

The area of the first predetermined region 120a1 corresponding to one first liquid disposition data Pa1 is different from the area of the second predetermined region 120a2 corresponding to one second liquid disposition data Pa2. The area of the second predetermined region 120a2 corresponding to one second liquid disposition data Pa2 is larger than the area of the first predetermined region 120a1 corresponding to one first liquid disposition data Pa1. The region corresponding to one liquid disposition data means a region where a film is formed based on one first liquid disposition data.

Here, an electrode producing apparatus 100 discharges the liquid composition to the second target region 142 in order to discharge the liquid composition thickened in a head 130, and bubbles or foreign matters mixed in the head 130, and the like. Such discharge of the liquid composition is discharge that does not contribute to the formation of a target film, and is called idle discharge or flushing or the like. In the present embodiment, the target film is formed in the first target region 141 and idle discharge is performed in the second target region 142 during the film forming operation by the electrode producing apparatus 100.

Since the liquid composition applied to the second target region 142 does not contribute to the formation of the target film, the liquid composition may be applied in any manner. However, since the second target region 142 is visible to the user, the user may erroneously recognize that the electrode base 102 is contaminated by the liquid composition applied to the second target region 142.

In order to reduce the erroneous recognition by the user, the idle discharge to the second target region 142 is preferably star flushing in which the applied liquid composition is visually inconspicuous.

In the present embodiment, the dispersibility of the position of the liquid composition applied to the second target region 142 is increased by making the area of the second predetermined region 120a2 larger than the area of the first predetermined region 120a1. By increasing the positional dispersibility of the liquid composition, the liquid composition applied to the second target region 142 becomes visually more inconspicuous.

Furthermore, the film formed by applying the liquid composition to the second target region 142 has a blue noise characteristic. Here, the blue noise refers to a noise having a characteristic that a spatial frequency component on a low frequency side is few and a spatial frequency peak is present on a high frequency side. Since human vision has relatively low spatial resolution on the high frequency side, the formation of a film having a blue noise characteristic in the second target region 142 makes it possible to further reduce the erroneous recognition of the contaminated electrode base 102 by the user.

The electrode producing apparatus 100 can create the image pattern of the second liquid disposition data Pa2 having a blue noise characteristic in advance to impart the blue noise characteristic to the film formed in the second target region 142.

### Operation and Effect According to Second Embodiment

As described above, the target region 140 according to the present embodiment includes the first target region 141 and the second target region 142, and the applying data Aa includes the plurality of first liquid disposition data Pa1 and the plurality of second liquid disposition data Pa2. Since the first liquid disposition data Pa1 can be created so that the target film can be formed, and the second liquid disposition data Pa2 can be created so as to be suitable for the idle discharge, both the target film formation and the idle discharge can be performed during the film formation operation. As a result, the thickening of the liquid composition in the head 130 and the mixing of air bubbles and foreign matters into the head 130 can be suppressed, so that the discharge abnormality of the liquid composition by the head 130 can be suppressed, and a high-quality film can be formed.

In the present embodiment, the area of one first predetermined region 120a1 is different from the area of one second predetermined region 120a2. For example, the area of the second predetermined region is larger than the area of the first predetermined region. As a result, the positional dispersibility of the liquid composition applied to the first target region 141 and the positional dispersibility of the liquid composition applied to the second target region 142 can be made different, so that the liquid composition applied to the second predetermined region 120a2 can be made visually inconspicuous. It is possible to prevent the user from erroneously recognizing that the electrode base 102 is contaminated.

The film formed in the second target region 142 more preferably has a blue noise characteristic. This characteristic makes it possible to further suppress the user from erroneously recognizing that the electrode base 102 is contaminated.

The operation and effect of the electrode producing apparatus 100 other than the above are similar to the operation and effect of the electrode producing apparatus 100 described in the first embodiment.

### Third Embodiment

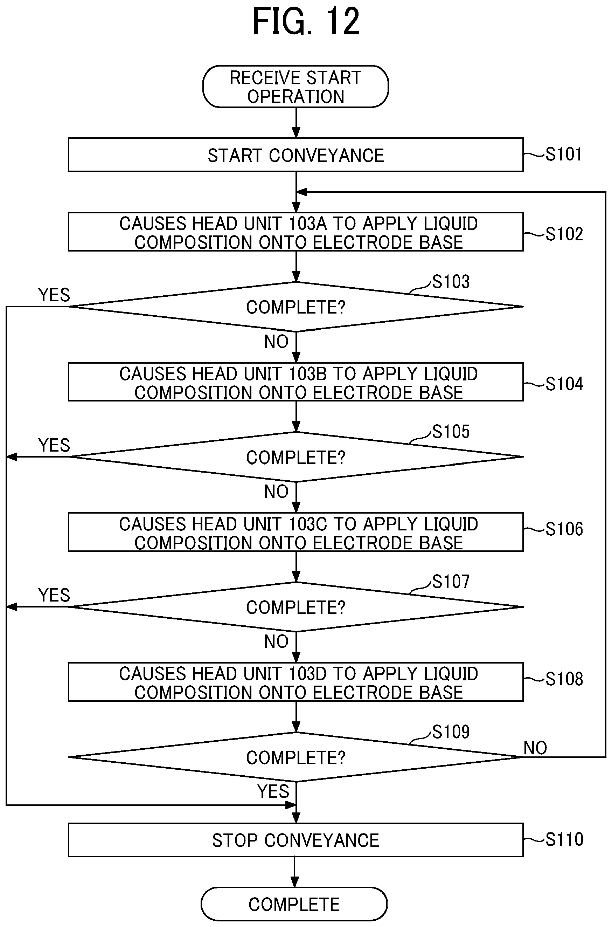

FIG. 12 is a flowchart illustrating the operation of an electrode producing apparatus 100 according to a third embodiment. The electrode producing apparatus 100 starts the operation of FIG. 12 with a timing at which electrode producing apparatus 100 receives a film formation start instruction, as a trigger, through an operation by a user using an operation unit of the electrode producing apparatus 100.

First, in step S101, the electrode producing apparatus 100 causes an unwinding unit 101 to start unwinding an electrode base 102, and causes a winding unit 107 to start winding the electrode base 102, to start conveying the electrode base 102.

Subsequently, in step S102, the electrode producing apparatus 100 causes a head unit 103A to discharge a liquid composition in parallel from all nozzles toward the electrode base 102 be conveyed and to stop the discharge of the liquid composition by all the nozzles after the electrode base 102 has been conveyed by a predetermined distance. As a result, the electrode producing apparatus 100 applies the liquid composition discharged from the head unit 103A to a region on the electrode base 102 corresponding to each of a predetermined distance in a conveyance direction 10 and an overall width in a width direction.

Subsequently, in step S103, the electrode producing apparatus 100 determines whether or not to complete the film formation. For example, the electrode producing apparatus 100 determines whether or not to complete the film formation by determining whether or not a predetermined completing condition is satisfied or by determining whether or not the electrode producing apparatus 100 has received a completing instruction from a user through the operation unit. The same applies to determination to complete the film formation.

When the electrode producing apparatus 100 determines in step S103 that the film formation is completed (Yes in step S103), the electrode producing apparatus 100 causes the operation to proceed to step S110. Meanwhile, when the electrode producing apparatus 100 determines that the film formation is not completed (No in step S103), the electrode producing apparatus 100 causes the operation to proceed to step S104.

Subsequently, in step S104, the electrode producing apparatus 100 causes a head unit 103B to discharge a liquid composition in parallel from all nozzles toward the electrode base 102 to be conveyed and to stop the discharge of the liquid composition by all the nozzles after the electrode base 102 is conveyed by a predetermined distance. As a result, the electrode producing apparatus 100 applies the liquid composition discharged from the head unit 103B to a region on the electrode base 102 corresponding to each of a predetermined distance in the conveyance direction 10 and an overall width in the width direction on the downstream side in the conveyance direction 10 of the region to which the liquid composition is applied by the head unit 103A.

Since the electrode producing apparatus 100 applies the liquid composition discharged from the head unit 103B to a position different from the head unit 103A in the conveyance direction 10, the liquid composition can be applied onto the electrode base 102 not continuously but intermittently.

When the liquid composition is applied onto the electrode base 102 in which a layer mainly composed of particles is provided on the outermost layer on a non-permeable substrate, substantially circular defects in which the liquid composition is not present on the electrode base 102 are apt to occur as compared with a case where a layer mainly composed of a resin component is provided. This phenomenon is considered to occur because when the liquid composition is applied onto the electrode base 102, air inside the layer mainly composed of particles in the electrode base 102 is replaced with liquid and discharged from the layer, and the liquid composition is inhibited from spreading on the electrode base 102. When the electrode base 102 having substantially circular defects is used as the electrode, a short circuit may occur.

In the present embodiment, since the liquid composition is applied onto the electrode base 102 not continuously but intermittently at a certain time interval, it is possible to secure a sufficient time for the air inside the layer mainly composed of particles to be replaced with the liquid composition and discharged. As a result, in the present embodiment, the liquid composition spreads on the electrode base 102 and covers the electrode base 102, which makes it possible to form a film suppressing defects having a substantially circular shape and the like on the electrode base 102 and having a controlled film thickness and excellent quality. Also in the first and second embodiments, air is discharged from the pixel 52 portion, that is, the non-application region 122, whereby a similar effect can be obtained.

Meanwhile, in the head 130, when a high viscosity liquid composition is discharged at a high frequency, discharge abnormality may occur. This is because the supply speed of the liquid composition to the head 130 is slow in the high frequency discharge, so that a pressure loss in a supply path increases.

In the present embodiment, since the liquid composition is intermittently applied by the plurality of heads 130 arranged in the conveyance direction 10 instead of being continuously applied at a high frequency by one head 130, the discharge frequency per one head 130 can be lowered. As a result, the discharge abnormality of the liquid composition by the head 130 can be suppressed.

The electrode producing apparatus 100 causes the head unit 103B to apply the liquid composition without any gap to the region to which the liquid composition is applied by the head unit 103A. The electrode producing apparatus 100 causes the head unit 103B to apply the liquid composition onto the electrode base 102 such that the area of the region to which the liquid composition is applied by the head unit 103B is substantially equal to the area of the region to which the liquid composition is applied by the head unit 103A.

Subsequently, in step S105, the electrode producing apparatus 100 determines whether or not to complete the film formation. When the electrode producing apparatus 100 determines in step S105 that the film formation is completed (Yes in step S105), the electrode producing apparatus 100 causes the operation to proceed to step S110. Meanwhile, the electrode producing apparatus 100 determines that the film formation is not completed (No in step S105), the electrode producing apparatus 100 causes the operation to proceed to step S106.

Subsequently, in step S106, the electrode producing apparatus 100 causes a head unit 103C to discharge a liquid composition in parallel from all nozzles toward the electrode base 102 to be conveyed and to stop the discharge of the liquid composition by all the nozzles after the electrode base 102 is conveyed by a predetermined distance. As a result, the electrode producing apparatus 100 applies the liquid composition discharged from the head unit 103C to a region on the electrode base 102 corresponding to each of a predetermined distance in the conveyance direction 10 and an overall width in the width direction on the downstream side in the conveyance direction 10 of the region to which the liquid composition is applied by the head unit 103B.

Since the electrode producing apparatus 100 applies the liquid composition discharged from the head unit 103C to a position different from the head unit 103B in the conveyance direction 10, the liquid composition can be applied onto the electrode base 102 not continuously but intermittently. The electrode producing apparatus 100 applies the liquid composition discharged from the head unit 103C without any gap to the region to which the liquid composition is applied by the head unit 103B. The electrode producing apparatus 100 applies the liquid composition discharged from the head unit 103C onto the electrode base 102 such that the area of the region to which the liquid composition is applied by the head unit 103C is substantially equal to the area of the region to which the liquid composition is applied by the head unit 103B.

Subsequently, in step S107, the electrode producing apparatus 100 determines whether or not to complete the film formation. When the electrode producing apparatus 100 determines in step S107 that the film formation is completed (Yes in step S107), the electrode producing apparatus 100 causes the operation to proceed to step S110. Meanwhile, when the electrode producing apparatus 100 determines that the film formation is not completed (No in step S107), the electrode producing apparatus 100 causes the operation to proceed to step S108.

Subsequently, in step S108, the electrode producing apparatus 100 causes a head unit 103D to discharge a liquid composition in parallel from all nozzles toward the electrode base 102 be conveyed and to stop the discharge of the liquid composition by all the nozzles after the electrode base 102 has been conveyed by a predetermined distance. As a result, the electrode producing apparatus 100 applies the liquid composition discharged from the head unit 103D to a region on the electrode base 102 corresponding to each of a predetermined distance in the conveyance direction 10 and an overall width in the width direction on the downstream side in the conveyance direction 10 of the region to which the liquid composition is applied by the head unit 103C.

Since the electrode producing apparatus 100 applies the liquid composition discharged from the head unit 103D to a position different from the head unit 103C in the conveyance direction 10, the liquid composition can be applied onto the electrode base 102 not continuously but intermittently. The electrode producing apparatus 100 applies the liquid composition discharged from the head unit 103D without any gap to the region to which the liquid composition is applied by the head unit 103C.

The electrode producing apparatus 100 applies the liquid composition discharged from the head unit 103D onto the electrode base 102 such that the area of the region to which the liquid composition is applied by the head unit 103D is substantially equal to the area of the region to which the liquid composition is applied by the head unit 103C.

Subsequently, in step S109, the electrode producing apparatus 100 determines whether or not to complete the film formation. When the electrode producing apparatus 100 determines in step S109 that the film formation is completed (Yes in step S109), the electrode producing apparatus 100 causes the operation to proceed to step S110. Meanwhile, the electrode producing apparatus 100 determines that the film formation is not completed (No in step S109), the electrode producing apparatus 100 causes the operation to return to step S102 to perform the operations after step S102 again.

Subsequently, in step S110, the electrode producing apparatus 100 causes the unwinding unit 101 to stop the unwinding of the electrode base 102, and causes the winding unit 107 to stop the winding of the electrode base 102 to stop the conveyance of the electrode base 102.

Thus, the electrode producing apparatus 100 can apply the liquid composition onto the electrode base 102 to form the film on the electrode base 102.

Here, when the pattern is repeatedly applied by the electrode producing apparatus 100, the applying position of the liquid composition on the electrode base 102 is fixed in the width direction 20. Therefore, for example, when discharge bending occurs in a predetermined nozzle in the head unit 103A, a region where the liquid composition is not continuously applied in the conveyance direction 10, that is, white streaks extending in the conveyance direction 10 are apt to occur.

In the present embodiment, the liquid composition is intermittently applied using the head units 103A and 103B in combination, whereby even if a portion where the liquid composition discharged from the head unit 103A is not applied occurs, the liquid composition discharged from the head unit 103B can fill this portion, so that the occurrence of the white streaks can be further suppressed.

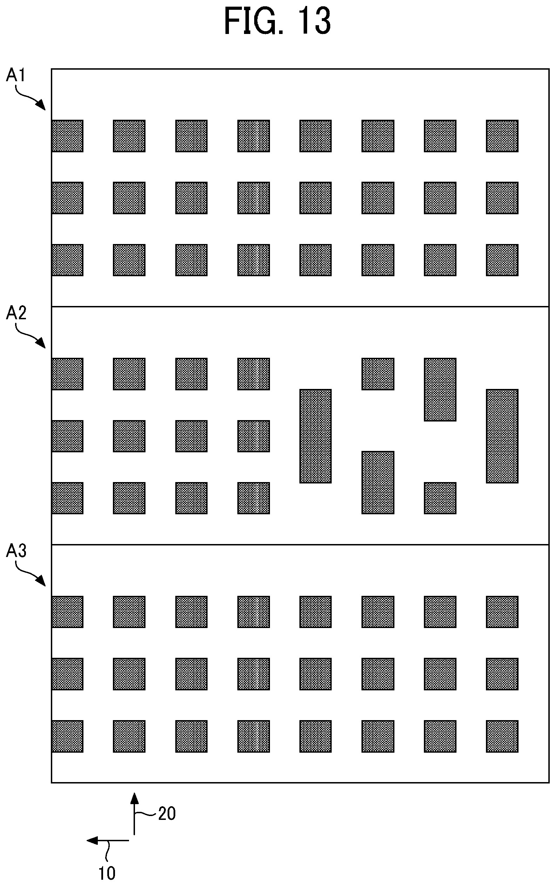

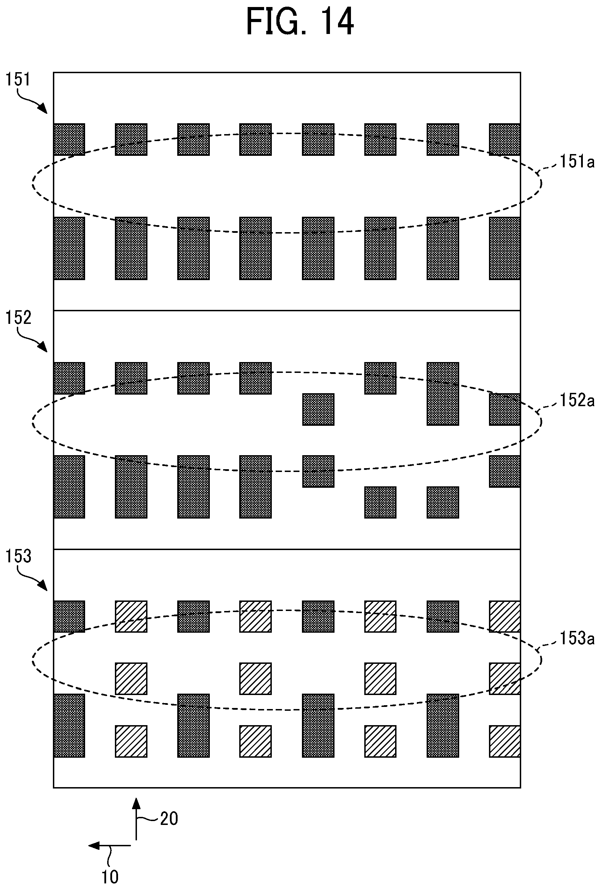

FIGS. 13 and 14 are diagrams for explaining prevention of white streaks according to the present embodiment. FIG. 13 is a diagram illustrating applying data according to the present embodiment, and FIG. 14 is a diagram illustrating an application example based on the applying data of FIG. 13.

FIG. 13 illustrates three applying data of applying data A1, A2, and A3. In FIG. 13, pixels indicated by dot hatching are pixels to which the liquid composition is applied, and pixels other than the pixels indicated by dot hatching are pixels to which the liquid composition is not applied. The applying data A1 and A3 include repetitive patterns, and the applying data A2 includes non-repetitive patterns.

FIG. 14 illustrates patterns formed by a liquid composition. A pattern 151 is a pattern of Comparative Example formed of a liquid composition discharged from only one head 130 based on the applying data A1 of FIG. 13. A pattern 152 is a pattern of Comparative Example formed of a liquid composition discharged from only one head 130 based on the applying data A2 in FIG. 13. A pattern 153 is a pattern formed by the liquid composition discharged from the two heads 130 arranged in the conveyance direction 10 based on the applying data A3 of FIG. 13.

In FIG. 14, a region indicated by dot hatching is a region to which the liquid composition discharged from a predetermined head 130 is applied. A region indicated by hatching is a region to which the liquid composition discharged from the other head different from the predetermined head 130 among the two heads 130 arranged in the conveyance direction 10 is applied. The non-hatched region is a region to which the liquid composition has not been applied.

In the pattern 151, in a region 151a, a region to which the liquid composition is not applied extends in the conveyance direction 10, and white stripes occur. In the pattern 152, the liquid composition is applied to a part of a region 152a corresponding to the region 151a in the pattern 151, and white streaks are inconspicuous. In the pattern 153, the liquid composition discharged from the other head is applied in a region 153a corresponding to the region 151a in the pattern 151, and white streaks are inconspicuous.

In Comparative Example, when the repetitive pattern is included in the applying data A1, white streaks occur. Meanwhile, in the present embodiment, even if the repetitive pattern is included in the applying data A3, the liquid composition discharged from the other head can be applied to the white streak region, so that white streaks are inconspicuous.

The operation and effect of the electrode producing apparatus 100 other than those described in the present embodiment are similar to those described in the first embodiment.

### Fourth Embodiment

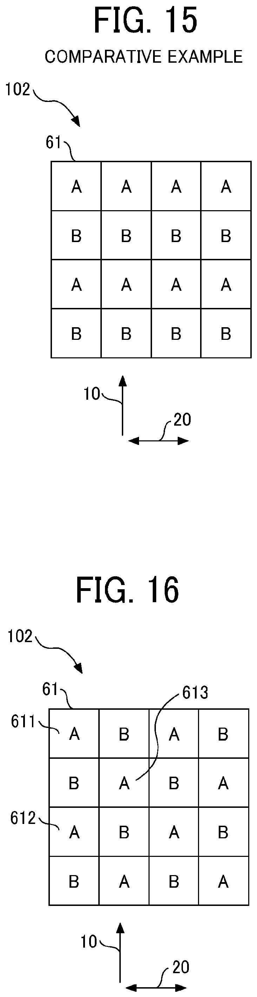

An application example of a liquid composition according to a fourth embodiment will be described with reference to FIGS. 15 and 16. FIG. 15 illustrates Comparative Example, and FIG. 16 illustrates the present embodiment. FIGS. 15 and 16 illustrate positions to which liquid compositions discharged from a head unit 103A and a head unit 103B are applied onto an electrode base 102.

Each square illustrated in FIGS. 15 and 16 represents a pixel region 61 to which the liquid composition is applied drop by drop on the electrode base 102. A plurality of pixel regions 61 are arranged in a conveyance direction 10 and a width direction 20, to form a matrix in which the conveyance direction 10 is a column and the width direction 20 is a row. In FIGS. 15 and 16, the square pixel region 61 is exemplified, but the shape of the pixel region 61 may be any shape.

"A" illustrated in the pixel region 61 indicates a pixel region to which a liquid composition is applied by the head unit 103A, and "B" illustrated in the pixel region 61 indicates a pixel region to which a liquid composition is applied by the head unit 103B. The same applies to the following description.

As illustrated in FIG. 15, in Comparative Example, the head unit 103A applies a liquid composition in the first row, the head unit 103B applies a liquid composition in the second row, the head unit 103A applies a liquid composition in the third row, and the head unit 103B applies a liquid composition in the fourth row, in this order from the downstream side (the upper side in the drawing) in the conveyance direction 10. That is, the head units that apply the liquid composition are different for each row. The same applies to the head units 103C and 103D.

As illustrated in FIG. 16, in the present embodiment, the head units 103A and 103B apply the liquid composition in a staggered manner. The application of the liquid composition in a staggered manner will be described in more detail. As illustrated in FIG. 16, the head unit 103A applies a first liquid composition 611, a second liquid composition 612, and a third liquid composition 613.

The first liquid composition 611, the second liquid composition 612, and the third liquid composition 613 each represent a liquid composition applied to the pixel region 61. The second liquid composition 612 is applied to the same position as the first liquid composition 611 in the width direction 20. That is, the pixel region to which the second liquid composition 612 is applied and the pixel region to which the first liquid composition 611 is applied have the same coordinates in the width direction 20.

Third liquid composition 613 is applied to an intermediate position between the first liquid composition 611 and the second liquid composition 612 in the conveyance direction 10, and the intermediate position is different from the position of the first liquid composition 611 in the width direction 20. That is, the pixel region to which the third liquid composition 613 is applied and the pixel region at the intermediate position between the first liquid composition 611 and the second liquid composition 612 in the conveyance direction 10 have the same coordinates in the conveyance direction 10. The pixel region to which the third liquid composition 613 is applied and the pixel region to which the first liquid composition 611 is applied have different coordinates in the width direction 20.

"The application of the liquid composition in a staggered manner" means that the first liquid composition 611, the second liquid composition 612, and the third liquid composition 613 are applied to the positions described above.

Here, among the liquid compositions applied by the head unit 103A, only the first liquid composition 611, the second liquid composition 612, and the third liquid composition 613 have been described. However, in the head unit 103A, the liquid compositions other than the first liquid composition 611, the second liquid composition 612, and the third liquid composition 613 can also be similarly applied in a zigzag manner onto the electrode base 102. Similarly, the head unit 103B can apply the liquid composition in a staggered manner onto the electrode base 102. However, the head unit 103B applies the liquid composition so that the pixel region does not overlap the liquid composition applied by the head unit 103A.

The head units 103C and 103D similarly apply the liquid composition in a staggered manner so as not to overlap the pixel region to which the liquid composition discharged from the other head unit is applied.

Although an example is illustrated in which the pixel region to which the first liquid composition 611 is applied and the pixel region to which the third liquid composition is applied are adjacent in the width direction 20, one or more pixel regions may be included between both the pixel regions in the width direction 20. FIG. 16 illustrates an example in which one pixel region is interposed between a pixel region to which the first liquid composition 611 is applied and a pixel region to which the second liquid composition 612 is applied in the conveyance direction 10. However, the number of pixel regions to be interposed between the two pixel regions is not limited to one, and two or more pixel regions may be included between both the pixel regions.

When an odd number of pixel regions are included between the pixel region to which the first liquid composition 611 is applied and the pixel region to which the second liquid composition 612 is applied in the conveyance direction 10, the third liquid composition 613 is applied to the pixel region at the intermediate position between both the pixel regions.

In the example of FIG. 16, one (odd number) pixel region is included between the pixel region to which the first liquid composition 611 is applied and the pixel region to which the second liquid composition 612 is applied in the conveyance direction 10, and the third liquid composition 613 is applied to this pixel region. However, when an even number of pixel regions are included between the pixel region to which the first liquid composition 611 is applied and the pixel region to which the second liquid composition 612 is applied in the conveyance direction 10, there is no pixel region having an intermediate position between both the pixel regions as a center position. In this case, the third liquid composition 613 is applied to the pixel region having the center at a position shifted to the upstream side or the downstream side in the conveyance direction 10 by 0.5 pixel regions with respect to the intermediate position of both the pixel regions. The applying method according to the present embodiment also has the same operation and effect as those of the applying method of the third embodiment.

The numbers such as ordinal numbers and numerical values used in the description of the embodiments are all given by way of example to more specifically describe the technologies of the present invention, and no limitation is indicated to the numbers given in the above description.

The embodiments include a film forming method. For example, the film forming method is a film forming method using a film forming apparatus that applies a liquid onto a base based on applying data and forms a film on the base, in which the film forming apparatus causes a control unit to generate the applying data by repeatedly arranging predetermined liquid disposition data indicating an applying position of the liquid in a predetermined region on the base, and causes a head to discharge the liquid based on the applying data generated by the control unit. By such a film forming method, the same operation and effect as those of the above-described electrode producing apparatus can be obtained.

Any one of the above-described operations may be performed in various other ways, for example, in an order different from the one described above.

## Claims

1. A film forming apparatus (100) comprising:
a control unit (400) configured to repeatedly arrange predetermined liquid disposition data (P) indicating an applying position of a liquid in a predetermined region (120) on a base (102), to generate an applying data (A); and
a head (130) configured to discharge the liquid onto the base (102) based on the applying data (A) generated by the control unit (400), to form a film on the base (102),
wherein the predetermined region (120) includes a target region (140) to which the liquid is to be applied by the film forming apparatus (100), and the target region (140) includes a first target region (141) and a second target region (142) different from the first target region (141), and
wherein the applying data (A) includes a plurality of first liquid disposition data (Pa1) for applying the liquid to the first target region (141) and a plurality of second liquid disposition data (Pa2) for applying the liquid to the second target region (142),
**characterised in that** the film formed in the second target region (142) has a blue noise characteristic.

2. The film forming apparatus (100) according to claim 1,
wherein the control unit (400) is configured to select the liquid disposition data (P) based on a film forming condition (C).

3. The film forming apparatus (100) according to claim 1 or 2,
wherein the control unit (400) includes a storage unit (404) that stores correspondence relationship information (407) between a film forming condition (C) and the liquid disposition data (P), and
wherein the control unit (400) is configured to select the liquid disposition data (P) with reference to the storage unit (404) based on the film forming condition (C).

4. The film forming apparatus (100) according to claim 1,
wherein an area of a first predetermined region (120a1) corresponding to one of the first liquid disposition data (Pa1) is different from an area of a second predetermined region (120a2) corresponding to one of the second liquid disposition data (Pa2).

5. The film forming apparatus (100) according to claim 4,
wherein the area of the second predetermined region (120a2) is larger than the area of the first predetermined region (120a1).

6. The film forming apparatus (100) according to any one of claims 1 to 5, further comprising a conveyance unit (101, 105, 107) configured to convey the base (102) in a conveyance direction (10),
wherein the head (130) includes a plurality of heads (130) configured to apply the liquid to different positions on the base (102) in the conveyance direction (10).

7. The film forming apparatus (100) according to claim 6,
wherein the plurality of heads (130) includes a plurality of nozzles aligned in a width direction (20) intersecting the conveyance direction (10),
each of the plurality of heads (130) applies at least a first liquid (611), a second liquid (612), and a third liquid (613) onto the base (102),
the second liquid (612) is applied to a position substantially equal to an applying position of the first liquid (611) in the width direction (20), and
the third liquid (613) is applied to a position between the applying position of the first liquid (611) and the applying position of the second liquid (612) in the conveyance direction (10), the position being different from the applying position of the first liquid (611) in the direction intersecting the conveyance direction (10).

8. An electrode (110), comprising:
a base (102); and
a film on the base (102), the film having a first coating film region (121) and a second coating film region (122),
wherein the first and second coating film regions (121, 122) are disposed alternately and periodically in a predetermined direction.

9. The electrode (110) according to claim 8,
wherein the first and second coating film regions (121, 122) are disposed alternately and periodically in a direction perpendicular to the predetermined direction.

10. The electrode (110) according to claim 8 or 9,
wherein the base (102) is a current collector.

11. The electrode (110) according to claim 8 or 9,
wherein the base (102) is an active material disposed on a current collector.

12. An electrochemical element comprising the electrode (110) according to any one of claims 8 to 11.

13. A film forming method comprising:
causing (S43) a control unit (400) to repeatedly arrange predetermined liquid disposition data (P) indicating an applying position of a liquid in a predetermined region (120) on a base (102), to generate an applying data (A), and
causing (S44) a head (130) to discharge the liquid onto the base (102) based on the applying data (A), to form a film on the base (102),
wherein the predetermined region (120) includes a target region (140) to which the liquid is to be applied by the film forming apparatus (100), and the target region (140) includes a first target region (141) and a second target region (142) different from the first target region (141), and
wherein the applying data (A) includes a plurality of first liquid disposition data (Pa1) for applying the liquid to the first target region (141) and a plurality of second liquid disposition data (Pa2) for applying the liquid to the second target region (142),
**characterised in that** the film formed in the second target region (142) has a blue noise characteristic.

## Patentansprüche

1. Folienausbildungseinrichtung (100), die umfasst:
eine Steuereinheit (400), die dazu konfiguriert ist, vorbestimmte Flüssigkeitsanordnungsdaten (P), die eine Auftragsposition einer Flüssigkeit in einem vorbestimmten Bereich (120) auf einer Basis (102) angeben, wiederholt anzuordnen, um Auftragsdaten (A) zu erzeugen; und
einen Kopf (130), der dazu konfiguriert ist, die Flüssigkeit auf die Basis (102) auf Grundlage der Auftragsdaten (A), die von der Steuereinheit (400) erzeugt wurden, auszustoßen, um eine Folie auf der Basis (102) auszubilden,
wobei der vorbestimmte Bereich (120) einen Zielbereich (140) beinhaltet, auf den die Flüssigkeit durch die Folienausbildungseinrichtung (100) aufgetragen werden soll, und der Zielbereich (140) einen ersten Zielbereich (141) und einen zweiten Zielbereich (142) beinhaltet, der sich von dem ersten Zielbereich (141) unterscheidet, und
wobei die Auftragsdaten (A) eine Mehrzahl von ersten Flüssigkeitsanordnungsdaten (Pa1) zum Auftragen der Flüssigkeit auf den ersten Zielbereich (141) und eine Mehrzahl von zweiten Flüssigkeitsanordnungsdaten (Pa2) zum Auftragen der Flüssigkeit auf den zweiten Zielbereich (142) beinhalten,
**dadurch gekennzeichnet, dass** die in dem zweiten Zielbereich (142) ausgebildete Folie eine blaue Rauschcharakteristik aufweist.

2. Folienausbildungseinrichtung (100) nach Anspruch 1,
wobei die Steuereinheit (400) dazu konfiguriert ist, die Flüssigkeitsanordnungsdaten (P) auf Grundlage einer Folienausbildungsbedingung (C) auszuwählen.

3. Folienausbildungseinrichtung (100) nach Anspruch 1 oder 2,
wobei die Steuereinheit (400) eine Speichereinheit (404) beinhaltet, die Entsprechungsbeziehungsinformationen (407) zwischen einer Folienausbildungsbedingung (C) und den Flüssigkeitsanordnungsdaten (P) speichert, und
wobei die Steuereinheit (400) dazu konfiguriert ist, die Flüssigkeitsanordnungsdaten (P) unter Bezugnahme auf die Speichereinheit (404) auf Grundlage der Folienausbildungsbedingung (C) auszuwählen.

4. Folienausbildungseinrichtung (100) nach Anspruch 1,
wobei sich eine Fläche eines ersten vorbestimmten Bereichs (120a1), der einer der ersten Flüssigkeitsanordnungsdaten (Pa1) entspricht, von einer Fläche eines zweiten vorbestimmten Bereichs (120a2) unterscheidet, der einer der zweiten Flüssigkeitsanordnungsdaten (Pa2) entspricht.

5. Folienausbildungseinrichtung (100) nach Anspruch 4,
wobei die Fläche des zweiten vorbestimmten Bereichs (120a2) größer ist als die Fläche des ersten vorbestimmten Bereichs (120a1).

6. Folienausbildungseinrichtung (100) nach einem der Ansprüche 1 bis 5, die ferner eine Fördereinheit (101, 105, 107) umfasst, die dazu konfiguriert ist, die Basis (102) in einer Förderrichtung (10) zu befördern,
wobei der Kopf (130) eine Mehrzahl von Köpfen (130) beinhaltet, die dazu konfiguriert sind, die Flüssigkeit auf verschiedene Positionen auf der Basis (102) in der Förderrichtung (10) aufzutragen.

7. Folienausbildungseinrichtung (100) nach Anspruch 6,
wobei die Mehrzahl von Köpfen (130) eine Mehrzahl von Düsen beinhaltet, die in einer Breitenrichtung (20) ausgerichtet sind, die die Förderrichtung (10) schneidet,
wobei jeder der Mehrzahl von Köpfen (130) wenigstens eine erste Flüssigkeit (611), eine zweite Flüssigkeit (612) und eine dritte Flüssigkeit (613) auf die Basis (102) aufträgt,
die zweite Flüssigkeit (612) an einer Position aufgebracht wird, die im Wesentlichen einer Auftragsposition der ersten Flüssigkeit (611) in der Breitenrichtung (20) entspricht, und
die dritte Flüssigkeit (613) an einer Position zwischen der Auftragsposition der ersten Flüssigkeit (611) und der Auftragsposition der zweiten Flüssigkeit (612) in der Förderrichtung (10) aufgetragen wird, wobei sich die Position von der Auftragsposition der ersten Flüssigkeit (611) in der Richtung unterscheidet, die die Förderrichtung (10) schneidet.

8. Elektrode (110), die umfasst:
eine Basis (102); und
eine Folie auf der Basis (102), wobei die Folie einen ersten Beschichtungsfolienbereich (121) und einen zweiten Beschichtungsfolienbereich (122) aufweist,
wobei der erste und der zweite Beschichtungsfolienbereich (121, 122) abwechselnd und periodisch in einer vorbestimmten Richtung angeordnet sind.

9. Elektrode (110) nach Anspruch 8,
wobei der erste und der zweite Beschichtungsfolienbereich (121, 122) abwechselnd und periodisch in einer Richtung senkrecht zu der vorbestimmten Richtung angeordnet sind.

10. Elektrode (110) nach Anspruch 8 oder 9,
wobei die Basis (102) ein Stromabnehmer ist.

11. Elektrode (110) nach Anspruch 8 oder 9,
wobei die Basis (102) ein auf einem Stromabnehmer angeordnetes aktives Material ist.

12. Elektrochemisches Element, das die Elektrode (110) nach einem der Ansprüche 8 bis 11 umfasst.

13. Folienausbildungsverfahren, das umfasst:
Veranlassen (S43) einer Steuereinheit (400), vorbestimmte Flüssigkeitsanordnungsdaten (P), die eine Auftragsposition einer Flüssigkeit in einem vorbestimmten Bereich (120) auf einer Basis (102) angeben, wiederholt anzuordnen, um Auftragsdaten (A) zu erzeugen; und
Veranlassen (S44) eines Kopfes (130), die Flüssigkeit auf die Basis (102) auf Grundlage der Auftragsdaten (A) auszustoßen, um eine Folie auf der Basis (102) auszubilden,
wobei der vorbestimmte Bereich (120) einen Zielbereich (140) beinhaltet, auf den die Flüssigkeit durch die Folienausbildungseinrichtung (100) aufgetragen werden soll, und der Zielbereich (140) einen ersten Zielbereich (141) und einen zweiten Zielbereich (142) beinhaltet, der sich von dem ersten Zielbereich (141) unterscheidet, und
wobei die Auftragsdaten (A) eine Mehrzahl von ersten Flüssigkeitsanordnungsdaten (Pa1) zum Auftragen der Flüssigkeit auf den ersten Zielbereich (141) und eine Mehrzahl von zweiten Flüssigkeitsanordnungsdaten (Pa2) zum Auftragen der Flüssigkeit auf den zweiten Zielbereich (142) beinhalten,
**dadurch gekennzeichnet, dass** die in dem zweiten Zielbereich (142) ausgebildete Folie eine blaue Rauschcharakteristik aufweist.

## Revendications

1. Appareil de formation de film (100) comprenant :
une unité de commande (400) conçue pour agencer de manière répétée des données de disposition de liquide (P) prédéterminées indiquant un emplacement d'application d'un liquide dans une région prédéterminée (120) sur une base (102), afin de générer des données d'application (A), et
une tête (130) conçue pour éjecter le liquide sur la base (102) en fonction des données d'application (A) générées par l'unité de commande (400), afin de former un film sur la base (102) ;
la région prédéterminée (120) comprenant une région cible (140) sur laquelle le liquide doit être appliqué par l'appareil de formation de film (100), et la région cible (140) comprenant une première région cible (141) et une deuxième région cible (142) différente de la première région cible (141), et
les données d'application (A) comprenant une pluralité de premières données de disposition de liquide (Pa1) pour l'application du liquide sur la première région cible (141) et une pluralité de deuxièmes données de disposition de liquide (Pa2) pour l'application du liquide sur la deuxième région cible (142),
**caractérisé en ce que** le film formé dans la deuxième région cible (142) présente une caractéristique de bruit bleu.

2. Appareil de formation de film selon (100) selon la revendication 1,
dans lequel l'unité de commande (400) est conçue pour sélectionner les données de disposition de liquide (P) en fonction d'une condition de formation de film (C).

3. Appareil de formation de film (100) selon la revendication 1 ou 2,
dans lequel l'unité de commande (400) comprend une unité de stockage (404) qui stocke des informations de relation de correspondance (407) entre une condition de formation de film (C) et les données de disposition de liquide (P), et
dans lequel l'unité de commande (400) est conçue pour sélectionner les données de disposition de liquide (P) eu égard à l'unité de stockage (404) en fonction de la condition de formation de film (C).

4. Appareil de formation de film selon (100) selon la revendication 1,
dans lequel la superficie d'une première région prédéterminée (120a1) correspondant à une des premières données de disposition de liquide (Pa1) est différente de la superficie d'une deuxième région prédéterminée (120a2) correspondant à une des deuxièmes données de disposition de liquide (Pa2).

5. Appareil de formation de film selon (100) selon la revendication 4,
dans lequel la superficie de la deuxième région prédéterminée (120a2) est supérieure à la superficie de la première région prédéterminée (120a1).

6. Appareil de formation de film (100) selon l'une quelconque des revendications 1 à 5, comprenant en outre une unité de transport (101, 105, 107) conçue pour transporter la base (102) dans une direction de transport (10),
la tête (130) comprenant une pluralité de têtes (130) conçues pour appliquer le liquide à différents emplacements sur la base (102) dans la direction de transport (10).

7. Appareil de formation de film selon (100) selon la revendication 6,
dans lequel la pluralité de têtes (130) comprend une pluralité de buses alignées dans une direction de largeur (20) croisant la direction de transport (10),
chacune des têtes (130) applique au moins un premier liquide (611), un deuxième liquide (612) et un troisième liquide (613) sur la base (102),
le deuxième liquide (612) est appliqué à un emplacement sensiblement égal à un emplacement d'application du premier liquide (611) dans la direction de largeur (20), et
le troisième liquide (613) est appliqué à un emplacement situé entre l'emplacement d'application du premier liquide (611) et l'emplacement d'application du deuxième liquide (612) dans la direction de transport (10), l'emplacement étant différent de l'emplacement d'application du premier liquide (611) dans la direction croisant la direction de transport (10).

8. Électrode (110) comprenant :
une base (102), et
un film sur la base (102), le film comportant une première région de film de revêtement (121) et une deuxième région de film de revêtement (122) ;
les première et deuxième régions de film de revêtement (121, 122) étant disposées de manière alternée et périodique dans une direction prédéterminée.

9. Électrode (110) selon la revendication 8,
dans laquelle les première et deuxième régions de film de revêtement (121, 122) sont disposées de manière alternée et périodique dans une direction perpendiculaire à la direction prédéterminée.

10. Électrode (110) selon la revendication 8 ou 9,
dans laquelle la base (102) est un collecteur de courant.

11. Électrode (110) selon la revendication 8 ou 9,
dans laquelle la base (102) est un matériau actif disposé sur un collecteur de courant.

12. Élément électrochimique comprenant l'électrode (110) selon l'une quelconque des revendications 8 à 11.

13. Procédé de formation de film comprenant :
la réalisation (S43), par une unité de commande (400), d'un agencement répété de données de disposition de liquide (P) prédéterminées indiquant un emplacement d'application d'un liquide dans une région prédéterminée (120) sur une base (102), afin de générer des données d'application (A), et
la réalisation (S44), par une tête (130), de l'éjection du liquide sur la base (102) en fonction des données d'application (A), afin de former un film sur la base (102) ;
la région prédéterminée (120) comprenant une région cible (140) sur laquelle le liquide doit être appliqué par l'appareil de formation de film (100), et la région cible (140) comprenant une première région cible (141) et une deuxième région cible (142) différente de la première région cible (141), et
les données d'application (A) comprenant une pluralité de premières données de disposition de liquide (Pa1) pour l'application du liquide sur la première région cible (141) et une pluralité de deuxièmes données de disposition de liquide (Pa2) pour l'application du liquide sur la deuxième région cible (142),
**caractérisé en ce que** le film formé dans la deuxième région cible (142) présente une caractéristique de bruit bleu.
